# DEMANDE DE BREVET EUROPEEN

(11) **EP 4 841 145 A1**
(43) Date de publication de la demande: **18.11.2026**
(21) Numéro de dépôt: 26157260.6
(22) Date de dépôt: 09.02.2026
(51) Int. Cl.: F16L 23/02, F16L 23/032, F16L 39/00, F16L 9/18

(54) **BRIDE POUR UNE CANALISATION DOUBLE PEAU**

(30) Priorité: 15.05.2025 FR 2505187
(71) Demandeur: Airbus Operations S.A.S., 31060 Toulouse (FR)
(72) Inventeur: CHAULET, Gilles, 31060 TOULOUSE (FR); CAZABONNE, Yannick, 31060 TOULOUSE (FR)
(74) Mandataire: Airbus-OPS SAS

(57) **Abrégé**

L'invention concerne une bride (100) pour une canalisation double peau et comportant un composant extérieur (101) comportant un fût extérieur (102), des entretoises intérieures (102a) solidaires du fût extérieur (102) et s'étendant vers l'intérieur du fût extérieur (102) et une collerette extérieure (102b) solidaire du fût extérieur (102) et s'étendant vers l'extérieur du fût extérieur (102), ledit fût extérieur (102) étant destiné à être fixé à un tuyau extérieur, un composant intérieur (103) comportant un fût intérieur (104), des entretoises extérieures (104a) solidaires du fût intérieur (104) et s'étendant vers l'extérieur du fût intérieur (104), ledit fût intérieur (104) étant logé dans le fût extérieur (102) et étant destiné à être fixé à un tuyau intérieur, et des moyens de fixation (106) assurant la fixation de chaque entretoise intérieure (102a) avec une entretoise extérieure (104a). Avec une telle bride, les fissures ne peuvent pas se propager d'un composant à l'autre.

## Description

### DOMAINE TECHNIQUE

La présente invention concerne une bride destinée à être fixée au niveau de l'extrémité d'une canalisation double peau. La présente invention concerne également un ensemble de jonction comportant au moins une telle bride et un aéronef comportant au moins une telle jonction.

### ÉTAT DE LA TECHNIQUE ANTÉRIEURE

Pour transporter un fluide, il est connu d'utiliser des canalisations. Pour éviter que le fluide se répande hors des canalisations en cas de fuite, il est connu d'utiliser des canalisations double peau. Une canalisation double peau comporte un tuyau extérieur et un tuyau intérieur fixé à l'intérieur du tuyau extérieur.

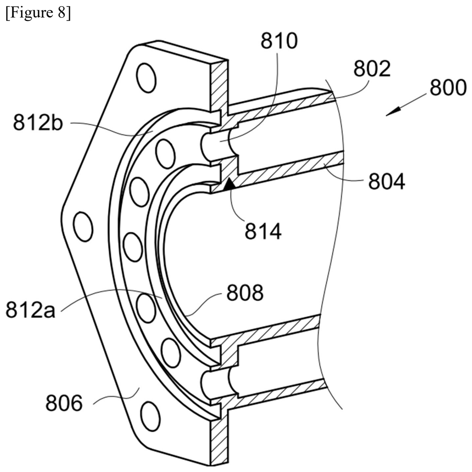

Pour fixer deux canalisations double peau dans le prolongement l'une de l'autre, il est connu d'utiliser une bride 800 comme celle représentée à la figure 8 et qui comporte un fût extérieur 802 et un fût intérieur 804 logé dans le fût extérieur 802. Le fût intérieur 804 est fixé au tuyau intérieur et le fût extérieur 802 est fixé au tuyau extérieur. Le fluide à transporter, comme le kérosène ou le dihydrogène, s'écoule dans le tuyau intérieur et le fût intérieur 804. Le volume entre le tuyau intérieur, respectivement le fût intérieur 804, et le tuyau extérieur, respectivement le fût extérieur 802, peut être rempli d'un fluide inerte comme le diazote afin de neutraliser le fluide à transporter en cas de fuite.

La bride 800 vient se fixer à une bride 800 similaire pour prolonger les canalisations et, lorsque les canalisations doivent traverser une paroi, une bride 800 est fixée de part et d'autre de la paroi.

La bride 800 comporte également une plaque 806 qui s'étend perpendiculairement aux axes des fûts 802 et 804 et qui est solidaire des deux fûts 802 et 804.

La plaque 806 présente un alésage central 808 qui est délimité par le fût intérieur 804 et qui permet le passage du fluide à transporter.

La plaque 806 présente entre le fût intérieur 804 et le fût extérieur 802, une pluralité d'alésages périphériques 810 qui permettent le passage du fluide inerte.

Pour éviter les mélanges entre les deux fluides et les fuites vers l'extérieur, des joints sont mis en place dans des rainures 812a où une rainure centrale 812a encercle l'alésage central 808 en restant à l'intérieur des alésages périphériques 810 et où une rainure périphérique 812b encercle les alésages périphériques 810.

Une telle bride 800 est ainsi constituée d'une seule pièce et si un début de fissure 814 apparaît dans la plaque 806, cette fissure 814 peut se propager à travers la plaque 806 au risque d'ouvrir un passage pour le fluide à transporter entre l'intérieur du fût intérieur 804 et l'extérieur.

Il est donc souhaitable de trouver un arrangement qui limite les risques de propagations de fissures et donc de fuites.

Le brevet US2011154886 divulgue un raccord à bride pour conduits de fluide, intégrant un dispositif de détection de fuites au niveau des interfaces de jonction.

Le brevet US2004026922 divulgue un dispositif de conduite de fluide gainé, comprenant un conduit interne protégé par un tube externe afin de confiner les fuites et répondre aux normes aéronautiques. Le brevet US2017198639 divulgue un système de drainage utilisant des tubes à double paroi où un tube externe concentrique capture les fuites du tube interne pour les acheminer vers une zone sécurisée via des raccords et une plaque de jonction spécifique.

### EXPOSÉ DE L'INVENTION

Un objet de la présente invention est de proposer une bride à fixer à une extrémité d'une canalisation double peau qui ne présente pas les problèmes de l'état de la technique et qui en particulier limite les risques de propagation d'une fissure.

À cet effet, est proposée une bride tel que revendiqué dans la revendication 1.

Avec une telle bride, les fissures ne peuvent pas se propager d'un composant à l'autre.

L'invention propose également un ensemble de jonction, tel que revendiqué dans la revendication 6. L'invention propose également un aéronef, tel que revendiqué dans la revendication 8.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La figure 1 est une vue de côté d'un aéronef comportant au moins un ensemble de jonction utilisant une bride selon l'invention,
La figure 2 est une vue en perspective d'une bride selon l'invention,
La figure 3 est une vue de face de la bride selon l'invention dans une position d'insertion,
La figure 4 est une vue de face de la bride selon l'invention dans une position d'utilisation,
La figure 5 est une vue de côté et en coupe par un plan axial de la bride selon l'invention,
La figure 6 est une vue de côté et en coupe par un plan axial d'un ensemble de jonction selon un premier mode de réalisation de l'invention,
La figure 7 est une vue en perspective et en coupe par un plan axial d'un ensemble de jonction selon un deuxième mode de réalisation de l'invention, et
La figure 8 est une vue en perspective et en coupe d'une bride de l'état de la technique.

### EXPOSÉ DÉTAILLÉ DE MODES DE RÉALISATION

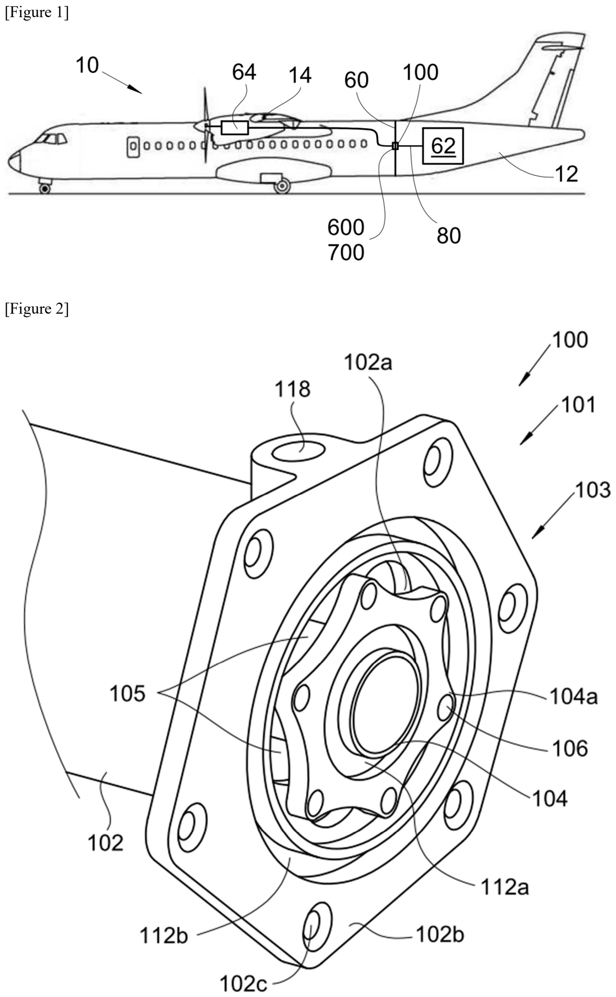

La figure 1 montre un aéronef 10 qui comporte ici de part et d'autre d'un fuselage 12, une aile 14 à laquelle est fixé un système consommateur 64 alimenté en carburant depuis un réservoir 62. Le carburant peut être du kérosène ou du dihydrogène. Dans le cas du kérosène, le système consommateur 64 est un moteur thermique comme une turbomachine. Dans le cas du dihydrogène, le système consommateur 64 peut être un moteur thermique comme une turbomachine ou une pile à combustible. Bien sûr, selon le cas, le réservoir 62 et le système consommateur 64 pourraient être disposés ailleurs dans l'aéronef 10.

Entre le réservoir 62 et le système consommateur 64, l'aéronef 10 comporte une canalisation principale à double peau. La canalisation principale traverse ici une paroi 60 de l'aéronef 10 au niveau d'un alésage que la paroi 60 présente à cet effet. Il y a alors une canalisation double peau 80 de part et d'autre de la paroi 60 et au niveau de la paroi 60, l'extrémité de chaque canalisation double peau 80 présente une bride 100 selon l'invention. Chaque bride 100 assure la fixation de l'extrémité équipée à la paroi 60, mais il est également possible de rallonger une première canalisation double peau 80 par une deuxième canalisation double peau 80 en fixant deux brides 100 directement l'une contre l'autre.

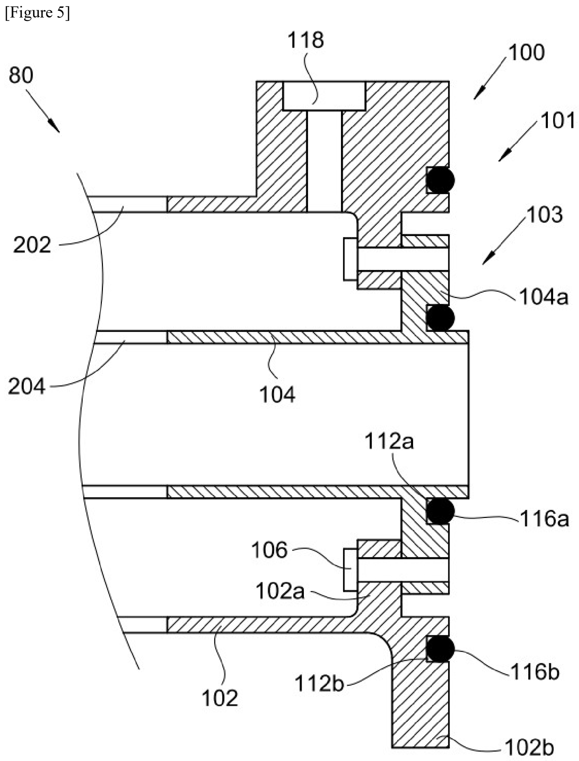

La figure 2 et la figure 5 montrent la bride 100 selon l'invention en position d'utilisation.

La canalisation double peau 80 comporte un tuyau extérieur 202 et un tuyau intérieur 204 qui est logé dans le tuyau extérieur 202. Chaque tuyau 202, 204 peut être rigide ou souple. Le fluide à transporter (kérosène, dihydrogène, ...) circule dans les tuyaux intérieurs 204 tandis qu'un fluide inerte (air, diazote, ...) peut être mis entre les deux tuyaux 202 et 204.

La bride 100 comporte un composant extérieur 101 et un composant intérieur 103.

Le composant extérieur 101 comporte un fût extérieur 102 qui est solidaire du tuyau extérieur 202. Le composant intérieur 103 comporte un fût intérieur 104 qui est solidaire du tuyau intérieur 204. La fixation du tuyau 202, 204 au fût 102, 104 associé s'effectue de toutes les manières connues par exemple à l'aide d'un collier de serrage, par soudage, etc.

Le fût intérieur 104 est ainsi logé dans le fût extérieur 102.

Le composant extérieur 101 comporte également des entretoises intérieures 102a qui sont solidaires du fût extérieur 102 et qui s'étendent vers l'intérieur du fût extérieur 102.

Parallèlement, le composant intérieur 103 comporte des entretoises extérieures 104a qui sont solidaires du fût intérieur 104 et qui s'étendent vers l'extérieur du fût intérieur 104.

La bride 100 comporte également des moyens de fixation 106 qui assurent la fixation de chaque entretoise intérieure 102a avec une entretoise extérieure 104a. Les moyens de fixation 106 sont par exemple des rivets. Les moyens de fixation 106 sont amovibles dans le sens où il est possible de séparer le composant intérieur 103 et le composant extérieur 101 sans les détériorer, par exemple en retirant les rivets.

Le composant extérieur 101 comporte également une collerette extérieure 102b qui est solidaire du fût extérieur 102 et qui s'étend vers l'extérieur du fût extérieur 102 et qui est prévu pour permettre la fixation du composant extérieur 101 à la paroi 60 ou à une collerette extérieure d'une autre bride similaire. Ici, la collerette extérieure 102b présente des perçages 102c pour la mise en place de vis de serrage.

Avec une telle bride 100, une amorce de fissure ne pourra pas se transmettre d'un composant 101, 103 à l'autre 103, 101 puisqu'ils sont physiquement séparés.

Les entretoises 102a et 104a sont au niveau de l'extrémité ouverte du fût 102, 104 concerné et le nombre d'entretoises 102a et 104a dépend entre autres des diamètres des fûts 102 et 104.

Comme cela est visible sur la figure 2,, lorsque les composants 101 et 103 sont en position d'utilisation, il existe des passages 105 entre les entretoises 102a et 104a pour permettre le passage d'un fluide si besoin comme pour les alésages périphériques 810 de l'état de la technique.

Pour faciliter la mise en place du composant intérieur 103 dans le composant extérieur 101, les entretoises intérieures 102a et les entretoises extérieures 104a sont conformées de manière à autoriser le passage des entretoises extérieures 104a à travers les entretoises intérieures 102a. Dans le mode de réalisation de l'invention, les entretoises extérieures 104a prennent la forme d'une couronne avec des pointes orientées vers l'extérieur et percées de trous pour le passage des moyens de fixation 106. Les pointes forment ainsi les entretoises extérieures 104a.

De la même manière, dans le mode de réalisation de l'invention, les entretoises intérieures 102a prennent la forme d'une couronne avec des pointes orientées vers l'intérieur et percées de trous pour le passage des moyens de fixation 106. Les pointes forment ainsi les entretoises intérieures 102a.

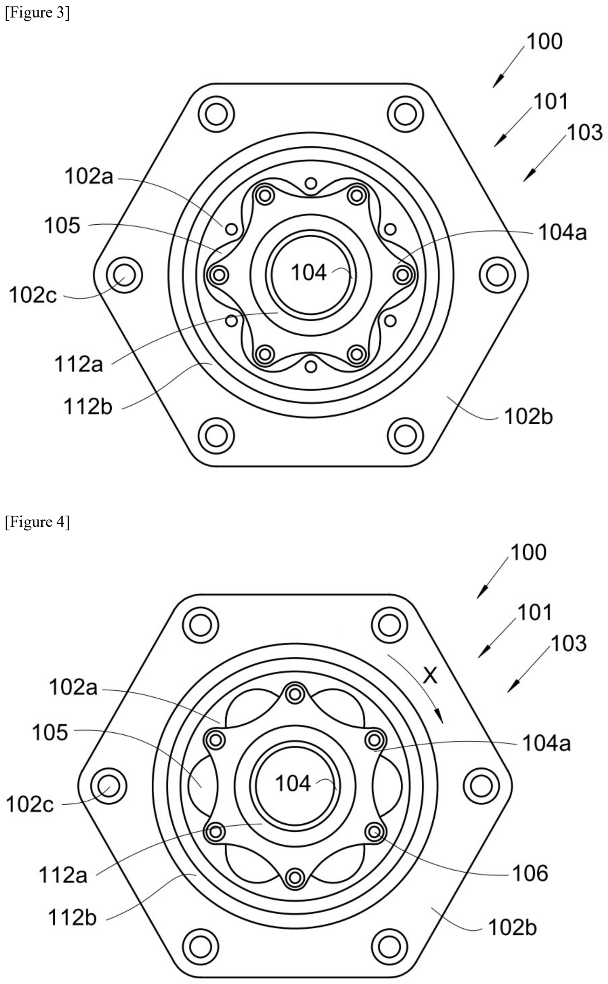

Comme le montre la figure 3, la conformation des entretoises extérieures 104a et la conformation des entretoises intérieures 102a sont telles que, dans une position d'insertion, les entretoises extérieures 104a peuvent passer entre les entretoises intérieures 102a. Puis, après une rotation X visible sur la figure 4, chaque entretoise extérieure 104a se retrouve en vis-à-vis d'une entretoise intérieure 102a et peut y être fixée par les moyens de fixation 106 dans une position d'utilisation. Bien sûr, les entretoises 102a et 104a peuvent prendre d'autres formes adaptées.

Pour assurer l'étanchéité, le composant intérieur 103 comporte une rainure centrale 112a qui encercle le fût intérieur 104, en particulier son extrémité ouverte, et la bride 100 comporte un joint central 116a qui est agencé dans la rainure centrale 112a.

De la même manière, la collerette extérieure 102b comporte une rainure périphérique 112b qui encercle le fût extérieur 102, en particulier son extrémité ouverte, et la bride 100 comporte un joint périphérique 116b qui est agencé dans la rainure périphérique 112b.

Ces joints 116a-b viennent contre la paroi 60 ou contre le même joint lorsque deux brides 100 sont fixées directement l'une contre l'autre.

Dans le mode de réalisation de l'invention représenté à la figure 2 et à la figure 5,, le composant extérieur 101 présente un canal 118 qui assure la communication fluidique entre l'extérieur du fût extérieur 102 et le volume entre le fût extérieur 102 et le fût intérieur 104. Un tel canal 118 permet l'installation d'un capteur ou l'introduction d'un fluide entre les deux fûts et les deux tuyaux.

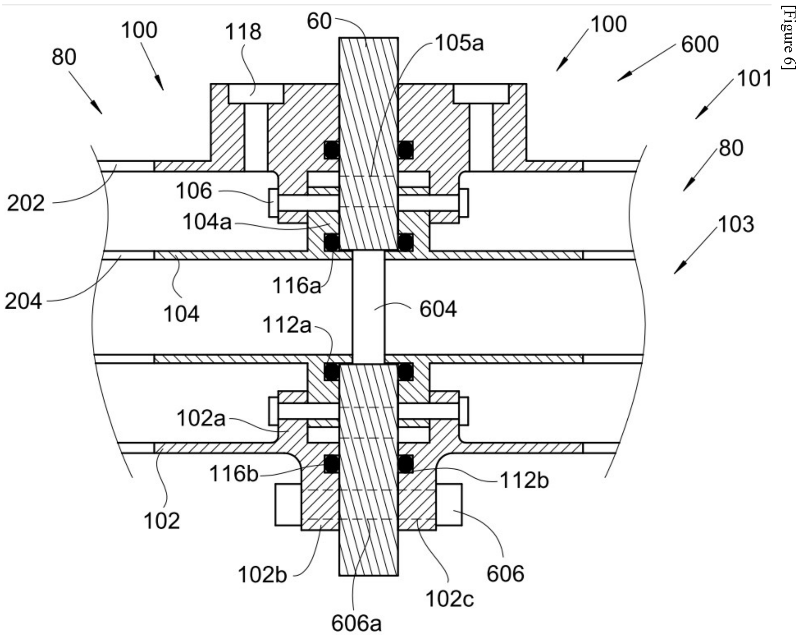

La figure 6 montre un ensemble de jonction 600 selon un premier arrangement qui comporte une paroi 60 percée d'un alésage 604 et deux brides 100 selon l'invention.

Les deux brides 100 sont disposées de part et d'autre de la paroi 60 et chaque fût intérieur 104 s'emmanche dans l'alésage 604 pour assurer une continuité fluidique pour le fluide circulant dans la canalisation double peau 80.

L'ensemble de jonction 600 comporte également des moyens de serrage 606 qui assurent le serrage de chaque bride 100 contre la paroi 60. Les moyens de serrage 606 prennent ici la forme d'éléments de visserie qui sont arrangés dans les perçages 102c de la collerette extérieure 102b de chaque bride 100 et qui traversent la paroi 60 au niveau de trous traversants 606a (vus en pointillés) prévus à cet effet.

Chaque joint central 116a vient en appui contre une face de la paroi 60 autour de l'alésage 604. De la même manière, chaque joint périphérique 116b vient en appui contre une face de la paroi 60.

La paroi 60 peut également présenter des trous traversants 105a (vus en pointillés) alignés avec les passages 105 entre les entretoises 102a et 104a pour permettre l'écoulement du fluide qui est entre les fûts 102 et 104 de part et d'autre de la paroi 60.

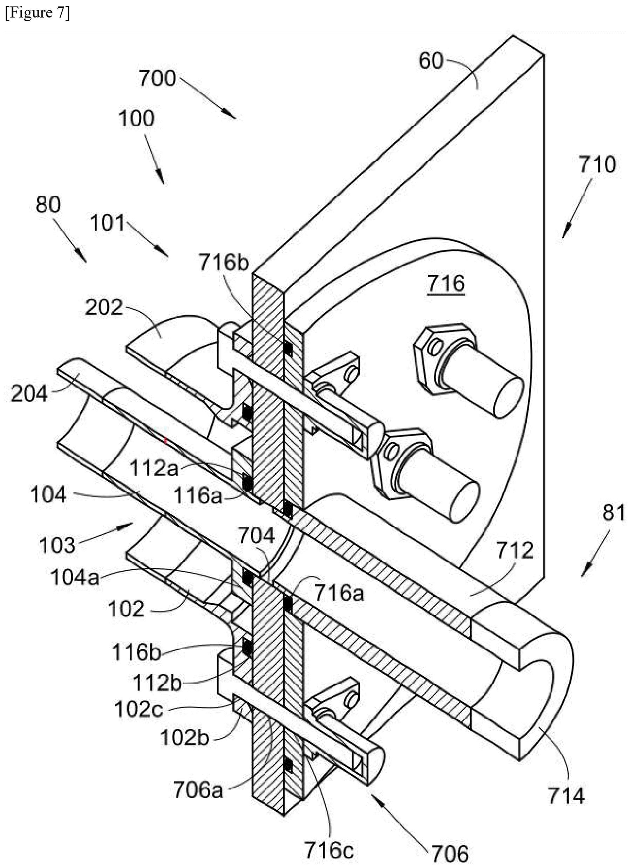

La figure 7 montre un ensemble de jonction 700 selon un deuxième arrangement qui comporte une paroi 60 percée d'un alésage 704, une bride 100 selon l'invention et un composant complémentaire 710 associé à une canalisation simple peau 81 comportant un tuyau complémentaire 714.

Un tel ensemble de jonction 700 permet le passage d'une canalisation double peau 80 à une canalisation simple peau 81.

La bride 100 est disposée d'un côté de la paroi 60 contre l'une des faces de la paroi 60 et le fût intérieur 104 s'emmanche dans l'alésage 704.

Le composant complémentaire 710 comporte un fût complémentaire 712 qui est fixé au tuyau complémentaire 714 et une palette 716 qui s'étend autour du fût complémentaire 712 et qui est disposée contre l'autre côté de la paroi 60 contre l'autre face de la paroi 60.

Le fût complémentaire 712 s'emmanche dans l'alésage 704 pour assurer une continuité fluidique pour le fluide circulant dans le tuyau intérieur 204.

L'ensemble de jonction 700 comporte également des moyens de serrage 706 qui assurent le serrage de la bride 100 et de la palette 716 contre la paroi 60.

Les moyens de serrage 706 prennent ici la forme d'éléments de visserie qui sont arrangés dans les perçages 102c de la collerette extérieure 102b de la bride 100 et dans des perçages 716c de la palette 716 et qui traversent la paroi 60 au niveau de trous traversants 706a prévus à cet effet.

Le composant complémentaire 710 comporte également un joint central 716a en appui contre une face de la paroi 60 autour de l'alésage 704 et un joint périphérique 716b autour des perçages 716c de la palette 716.

Pour la bride 100, le joint central 116a vient en appui contre l'autre face de la paroi 60 autour de l'alésage 704 et de la même manière, le joint périphérique 116b vient en appui contre l'autre face de la paroi 60.

Pour éviter les fuites au niveau des moyens de serrage 706, ceux-ci comportent une vis de serrage et un écrou borgne fixé à la palette 716.

L'aéronef 10 comporte ainsi au moins un ensemble de jonction 600 selon le premier arrangement ou au moins un ensemble 700 selon le deuxième arrangement.

## Revendications

1. Bride (100) pour une canalisation double peau (80) comportant un tuyau extérieur (202) et un tuyau intérieur (204), ladite bride (100) comportant :
- un composant extérieur (101) comportant un fût extérieur (102), des entretoises intérieures (102a) solidaires du fût extérieur (102) et s'étendant vers l'intérieur du fût extérieur (102) et une collerette extérieure (102b) solidaire du fût extérieur (102) et s'étendant vers l'extérieur du fût extérieur (102), ledit fût extérieur (102) étant destiné à être fixé au tuyau extérieur (202),
- un composant intérieur (103) comportant un fût intérieur (104), des entretoises extérieures (104a) solidaires du fût intérieur (104) et s'étendant vers l'extérieur du fût intérieur (104), ledit fût intérieur (104) étant logé dans le fût extérieur (102) et étant destiné à être fixé au tuyau intérieur (204), et des moyens de fixations (106),
**caractérisé en ce que** les moyens de fixation (106) assurent la fixation de chaque entretoise intérieure (102a) avec une entretoise extérieure (104a).

2. Bride (100) selon la revendication 1, **caractérisée en ce que** les entretoises intérieures (102a) et les entretoises extérieures (104a) sont conformées de manière à autoriser le passage des entretoises extérieures (104a) à travers les entretoises intérieures (102a).

3. Bride (100) selon l'une des revendications 1 ou 2, **caractérisée en ce que** le composant intérieur (103) comporte une rainure centrale (112a) qui encercle le fût intérieur (104) et **en ce que** la bride (100) comporte un joint central (116a) agencé dans la rainure centrale (112a).

4. Bride (100) selon l'une des revendications 1 à 3, **caractérisée en ce que** la collerette extérieure (102b) comporte une rainure périphérique (112b) qui encercle le fût extérieur (102) et **en ce que** la bride (100) comporte un joint périphérique (116b) agencé dans la rainure périphérique (112b).

5. Bride (100) selon l'une des revendications 1 à 4, **caractérisée en ce que** le composant extérieur (101) présente un canal (118) assurant la communication fluidique entre l'extérieur du fût extérieur (102) et le volume entre le fût extérieur (102) et le fût intérieur (104).

6. Ensemble de jonction (600) comportant :
- une paroi (60) percée d'un alésage (604),
- deux brides (100) selon l'une des revendications 1 à 5, disposées de part et d'autre de la paroi (60) où chaque fût intérieur (104) s'emmanche dans l'alésage (604), et
- des moyens de serrage (606) assurant le serrage de chaque bride (100) contre la paroi (60).

7. Ensemble de jonction (700) comportant :
- une paroi (60) percée d'un alésage (704),
- une bride (100) selon l'une des revendications 1 à 5 disposée contre un côté de la paroi (60) où le fût intérieur (104) s'emmanche dans l'alésage (704),
- un composant complémentaire (710) comportant un fût complémentaire (712) destiné à être fixé à un tuyau complémentaire (714) et une palette (716) s'étendant autour du fût complémentaire (712) et disposée contre un autre côté de la paroi (60) où le fût complémentaire (712) s'emmanche dans l'alésage (704), et
- des moyens de serrage (706) assurant le serrage de la bride (100) et de la palette (716) contre la paroi (60).

8. Aéronef (10) comportant au moins un ensemble de jonction (600) selon la revendication 6 ou au moins un ensemble (700) selon la revendication 7.
